Europäisches Patentamt

European Patent Office

Office européen des brevets

(11) Veröffentlichungsnummer: **0 222 111**
**B1**

(12) **EUROPÄISCHE PATENTSCHRIFT**

(45) Veröffentlichungstag der Patentschrift:
**16.05.90**

(21) Anmeldenummer: **86112853.6**

(22) Anmeldetag: **17.09.86**

(51) Int. Cl.⁵: **G11B 15/665**

(54) **Video-Magnetbandgerät.**

(30) Priorität: **15.11.85 DE 3540512**

(43) Veröffentlichungstag der Anmeldung:
**20.05.87 Patentblatt 87/21**

(45) Bekanntmachung des Hinweises auf die Patenterteilung:
**16.05.90 Patentblatt 90/20**

(84) Benannte Vertragsstaaten:
**AT CH DE FR GB IT LI**

(56) Entgegenhaltungen:
**EP-A- 198 512**
**EP-A- 0 068 746**
**EP-A- 0 105 501**
**GB-A- 2 020 879**
**US-A- 4 264 937**

(73) Patentinhaber: **GRUNDIG E.M.V. Elektro-Mechanische Versuchsanstalt Max Grundig holländ. Stiftung & Co. KG., Kurgartenstrasse 37, D-8510 Fürth/Bay.(DE)**

(72) Erfinder: **Schmidt, Erhard, Ing. grad., Wickenstrasse 46, D-8510 Fürth/Bayern(DE)**

### Beschreibung

Die Erfindung bezieht sich auf ein Video-Magnetbandgerät mit einer Einrichtung zur schrittweisen Mitnahme von Bandführungs- und/oder Bandandruckelementen durch ein Antriebselement gemäß dem Oberbegriff des Anspruchs 1.

Es sind Video-Magnetbandgeräte bekannt, bei denen das Magnetband aus einer Bandkassette mit zwei Bandwickelspulen herausgezogen und in Schräglage um einen Teil einer rotierenden Kopftrommel gelegt wird, wobei der Kopftrommel wenigstens ein Video-Magnetkopf zugeordnet ist. Zur Führung des Magnetbandes sind bei bekannten Bandführungseinrichtungen in Videogeräten die erforderlichen Bandführungselemente wenigstens teilweise auf einem ringförmigen Träger angeordnet. Der Träger ist um die Kopftrommel gelegt und in beiden Drehrichtungen antreibbar. Da das Magnetband in Form einer Schlaufe um die Kopftrommel gezogen wird, sind mehrere Bandführungselemente bzw. Bandführungsstifte erforderlich, damit vermieden wird, daß das Magnetband im Schlaufenbereich und im übrigen Führungsbereich übereinander zu liegen kommt. Die verschiedenen Bandführungsstifte nehmen daher während des Bandeinzugsvorganges im Bereich der Kopftrommel zwischen der Ausgangslage und der Endlage (Band um die Kopftrommel geführt) verschiedene Abstandspositionen zueinander ein. Somit können nicht alle Bandführungsstifte einem Träger fest zugeordnet werden. Es ist daher bekannt, daß Bandführungsstifte auf mindestens zwei der Kopftrommel zugeordneten Träger angeordnet sind, und die Träger getrennt in verschiedene Endstellungen gedreht werden können. Es ist auch bekannt, daß zusätzlich zu einem oder zwei ringförmigen und getrennt antreibbaren Trägern mit Bandführungselementen noch weitere Bandführungselemente auf eigenen Schwenkhebeln angeordnet in einem Gerät eingesetzt sind. Der getrennte Antrieb dieser Schwenkhebel ist aufwendig und bedarf einer genauen zeitlich mit der Bewegung des Trägers abgestimmten Steuerung.

Aus der EP-A 0 198 512 ist ein ringförmiger Träger bekannt, der um eine Kopftrommel eines Video-Magnetbandgerätes angeordnet ist. Der ringförmige Träger ist aus mehreren übereinander angeordneten Scheiben bei unterschiedlicher Lage und Durchmesser zusammengesetzt. Die Scheiben weisen bedarfsweise eine Innen- und eine Außenverzahnung auf, und dienen einerseits der Mitnahme von aufgesetzten Bandführungselementen und bewirken andererseits bei unterschiedlichem Antrieb die Bewegung von Bandandruckelementen und anderen Geräte-Steuerfunktionen.

Die der Erfindung zugrundeliegende Aufgabe besteht darin, eine preiswerte Einrichtung und Ansteuerung von Bandführungselementen, die getrennt auf einem Schwenkhebel angeordnet sind, zu schaffen, wobei der Antrieb schrittweise durch ein Antriebselement, das aus einer ringförmig um die Kopftrommel drehbar angeordneten Steuerscheibe besteht, vorgesehen ist.

Diese Aufgabe wird durch die kennzeichnenden Merkmale im Anspruch 1 gelöst.

Die Unteransprüche zeigen Ausgestaltungen der Erfindung.

Die Erfindung wird nachfolgend anhand der Zeichnungen erläutert.

Fig. 1 ist eine vereinfachte Draufsicht auf eine Kopftrommel eines Video-Magnetbandgerätes mit einer Steuerscheibe zur Betätigung von Bandführungselementen sowie einer Kassette mit einem eingelegten Magnetband,

Fig. 2 ist eine Ansicht ähnlich der Fig. 1, jedoch mit aus der Kassette herausgezogenem und teilweise um die Kopftrommel geführtem Magnetband,

Fig. 3 ist eine Teilansicht der Fig. 1, wobei der Eingriff einer Zahnradanordnung in eine Steuerscheibe vergrößert dargestellt ist.

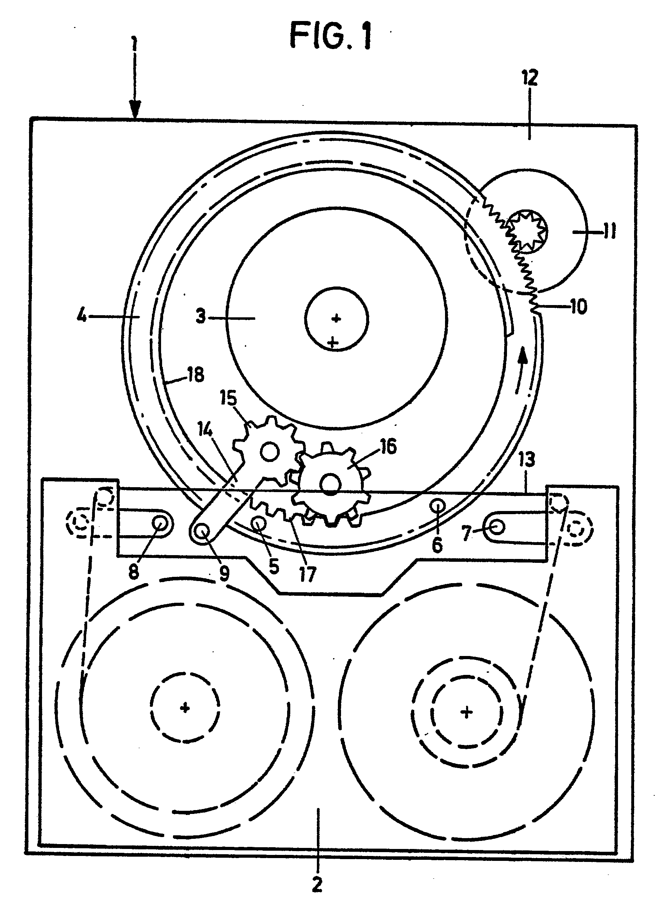

Die Figur 1 zeigt in vereinfachter Darstellung eine Draufsicht auf einen Teil eines Video-Magnetbandgerätes 1, von dem durch Umrißlinien erkennbar eine Magnetbandkassette 2, eine Kopftrommel 3 mit zugeordneter ringförmiger Steuerscheibe 4, sowie verschiedenen Bandführungselementen in Form von Bandführungsstiften 5 bis 8 gezeichnet sind. Die Steuerscheibe 4 weist einen äußeren Zahnkranz 10 auf und ist über einen Motor 11 in beiden Drehrichtungen antreibbar. Alle Teile sind direkt oder über Steuerelemente auf einem Gerätechassis 12 montiert. Beim Auflegen einer Kassette 2 auf das Gerät 1 wird das Magnetband 13, das sich in der Kassette befindet, von den Bandführungselementen hinterfaßt und kann von diesen aus der Kassette herausgezogen werden. Die Bandführungselemente sind vorzugsweise als senkrecht hochstehende Bandführungsstifte ausgeführt, wobei die Bandführungsstifte 5 und 6 auf der Steuerscheibe fest aufgesetzt sind, und die Führungsstifte 7, 8 und 9 je auf einem Schwenkhebel befestigt sind.

Der Bandführungsstift 9 befindet sich auf einem Schwenkhebel 14, der im Bereich der Lagerstelle mit einem Zahnkranz 15 versehen ist. Der Zahnkranz 15 ist in Eingriff zu einer Zahnradanordnung 16, die sich wiederum in Eingriff zur Steuerscheibe 4 befindet. Die Steuerscheibe weist im inneren Bereich teilweise eine Innenverzahnung 17 auf, die jedoch durch eine Gleitfläche 18 unterbrochen ist. Wird die Steuerscheibe 4 durch den Antriebsmotor in Pfeilrichtung gedreht, so wandern die Bandführungsstifte 5 und 6, die das Magnetband mitnehmen, in eine neue Position, und gleichzeitig dreht sich die Zahnradanordnung 16 und diese bewegt über den Schwenkhebel 14 den Bandführungsstift, der entgegen der Pfeilrichtung eine neue Position einnimmt. Da die Innenverzahnung 17 nur über einen Teilbereich an der Steuerscheibe 4 angebracht ist, wird der Schwenkhebel in eine bestimmte vorgegebene Stellung verschwenkt und verbleibt dann in dieser Lage, da das Triebrad durch die Gleitfläche 18 der Steuerscheibe 4 am Weiterdrehen gehindert wird.

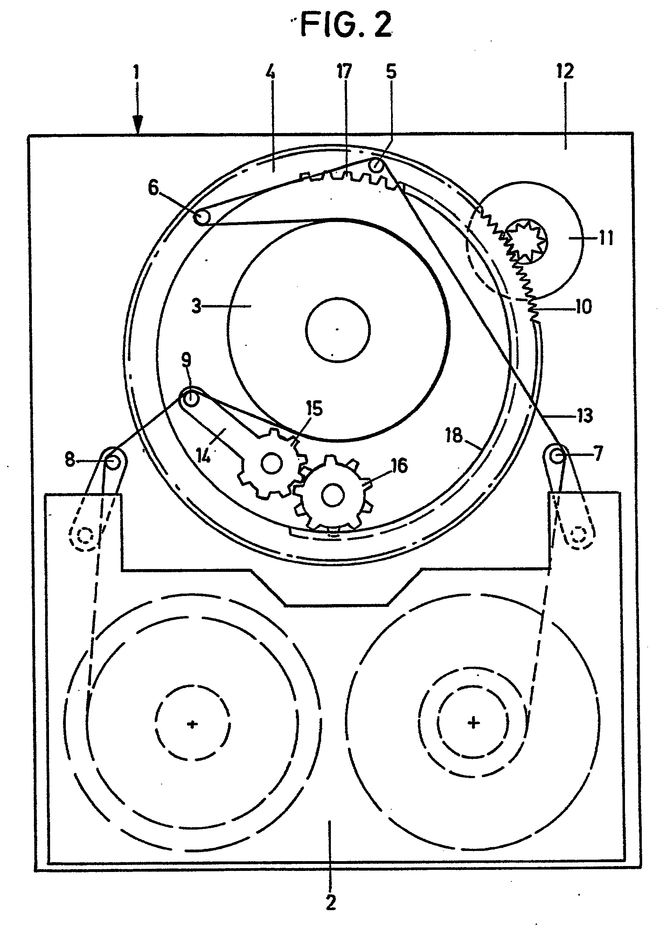

Die Figur 2 zeigt die nach dem Verdrehen der Steuerscheibe veränderte Lage der Bandführungsstifte 5 bis 9. Mit der Bewegung der Bandführungsstifte wird das Magnetband 13 aus der Kassette herausgezogen und teilweise um die Kopftrommel 3 gelegt sowie in eine Position gebracht, in der das Band noch von anderen Signalwandlern (Audiokopf, Löschkopf) abgetastet werden kann. Die den Bandführungsstiften 7 und 8 zugeordneten Schwenkhebel können durch die Steuerscheibe in gleicher Weise angetrieben werden wie der Schwenkhebel 14, auf dem der Bandführungsstift 9 aufsitzt.

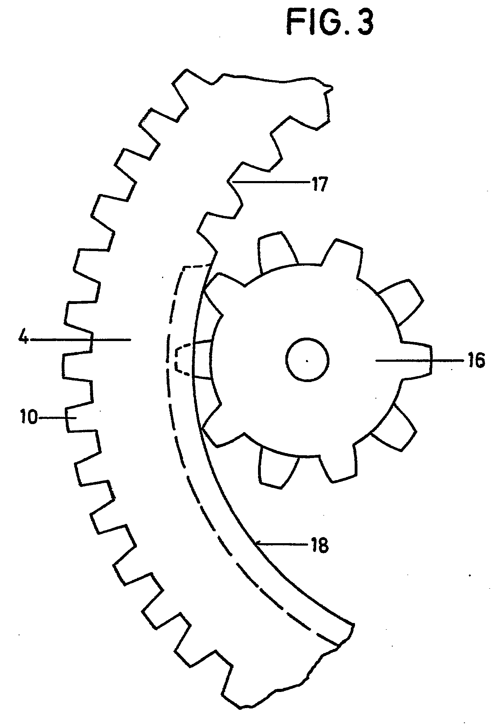

Aus der Figur 3 ist zu erkennen, wie die Zahnradanordnung 16 an der Gleitfläche 18 der Steuerscheibe 4 anliegt und, wie in der Zeichnung dargestellt, gesperrt ist oder durch die Innenverzahnung 17 bzw. Innen-Verzahnungsbereich 17 angetrieben wird. Die Zahnradanordnung 16 weist, wie bei sogenannten Springrollenzählwerken bekannt, eine Zahnanordnung auf, bei der jeder zweite Zahn in axialer Richtung verkürzt ist. Der jeweils axialverkürzte und in die Gleitfläche der Steuerscheibe hineinragende Zahn ist dadurch freiliegend, da die Gleitfläche der Steuerscheibe gegenüber dem verzahnten Bereich ebenfalls in axialer Richtung verkürzt ist.

## Patentansprüche

1. Video-Magnetbandgerät mit einer Einrichtung zur schrittweisen Mitnahme von Bandführungs- und/oder Bandandruckelementen durch ein Antriebselement, wobei das Videogerät eine drehbare Kopftrommel (3) mit zugeordneten Magnetköpfen aufweist, und das Magnetband (13) mittels Bandführungselemente (8, 7) aus einer Kassette (2) herausgezogen in Schrägspurführung teilweise um die rotierende Kopftrommel gelegt wird, und daß ferner Bandführungselemente (5, 6) auf dem Antriebselement angeordnet sind, und das Antriebselement aus einer ringförmig um die Kopftrommel drehbar angeordneten Steuerscheibe (4) besteht, die von einem Antriebsmotor (11) in beiden Drehrichtungen antreibbar ist, dadurch gekennzeichnet, daß die Steuerscheibe (4) eine innere und/oder äußere Verzahnung (10, 17) aufweist, daß die Verzahnung im äußeren oder inneren Bereich (17) teilweise durch Gleitflächen (18) unterbrochen ist, daß mindestens eine Zahnradanordnung (16) im Sinne der Mitnahme in den mit Gleitflächen versehenen Verzahnungsbereich (17) eingreift und im Bereich der Gleitflächen (18) derart an den Gleitflächen anliegt, daß die Mitnahme der Zahnradanordnung (16) gesperrt ist, und daß die Zahnradanordnung (16) über ein oder mehrere Zwischenräder mit einem oder mehreren Schwenkhebeln (14), die der Aufnahme von Führungs- und/oder Bandandruckelementen dienen, in Eingriff ist.

2. Video-Magnetbandgerät nach Anspruch 1, dadurch gekennzeichnet, daß die Zahnradanordnung (16) ein Zahnrad mit einer an sich bekannten Zahnanordnung aufweist, bei der jeder zweite Zahn in axialer Richtung verkürzt ist.

3. Video-Magnetbandgerät nach Anspruch 2, dadurch gekennzeichnet, daß die Gleitfläche (18) der Steuerscheibe (4) eine axiale Breite derart aufweist, daß sie nur gegenüber dem axialen Teil des Zahnrades wirksam ist, bei dem jeder zweite Zahn fehlt.

## Claims

1. Magnetic-tape video recorder with an arrangement for driving in stages tape guide elements and/or tape pinch elements by a drive element, the video recorder having a rotatable head drum (3) with associated magnetic heads, and the magnetic tape (13), drawn out of a cassette (2) by means of tape guide elements (8, 7), being placed helically part of the way around the rotating head drum, and in that furthermore tape guide elements (5, 6) are arranged on the drive element, and the drive element consists of a control disc (4) which is arranged rotatably in the form of a ring around the head drum and can be driven in both directions of rotation by a drive motor (11), characterized in that the control disc (4) has an internal and/or external toothing (10, 17), in that the toothing in the outer or inner region (17) is partially interrupted by smooth surfaces (18), in that at least one gear wheel arrangement (16) engages in a driving sense in the toothing region (17) provided with smooth surfaces and, in the region of the smooth surfaces (18), bears against the smooth surfaces in such a way that the driving of the gear wheel arrangement (16) is blocked, and in that the gear wheel arrangement (16) is in engagement via one or more intermediate wheels with one or more pivoted levers (14), which serve to receive guide elements and/or tape pinch elements.

2. Magnetic-tape video recorder according to Claim 1, characterized in that the gear wheel arrangement (16) has a gear wheel with a tooth arrangement known per se, in which every second tooth is shortened in the axial direction.

3. Magnetic-tape video recorder according to Claim 2, characterized in that the smooth surface (18) of the control disc (4) has an axial width such that it is only effective with respect to the axial part of the gear wheel on which every second tooth is missing.

## Revendications

1. Magnétoscope comportant un dispositif pour entraîner pas-à-pas des éléments de guidage et/ou de serrage de la bande au moyen d'un élément d'entraînement, le magnétoscope comportant un tambour rotatif porte-têtes (3) auquel sont associées des têtes magnétiques, et la bande magnétique (13) tirée d'une cassette (2) est appliquée partiellement autour du tambour rotatif porte-têtes à l'aide d'éléments (8, 7) de guidage de la bande, avec un guidage suivant des pistes obliques, et dans lequel en outre des éléments (5, 6) de guidage de la bande sont disposés sur l'élément d'entraînement, qui est constitué par un disque de commande (4) en forme d'un anneau disposé de manière à pouvoir tourner autour du tambour porte-têtes et pouvant être entraîné par un moteur d'entraînement (11) dans les deux sens de rotation, caractérisé en ce que le disque de commande (4) possède une denture intérieure et/ou extérieure (10, 17), que la denture située dans la zone extérieure ou dans la zone intérieure (17) est partiellement interrompue par des surfaces lisses (18), qu'au moins un dispositif en forme de pignon (16) engrène, de manière à réaliser un entraînement, dans la zone (17) de la denture comportant des surfaces lisses et s'applique, au niveau des surfaces lisses (18), contre ces dernières de telle sorte que l'entraînement du dispositif en forme de pignon (16) est bloqué et que ce dispositif en forme de pignon (16) engrène, par l'intermédiaire d'un ou de plusieurs pignons intermédiaires, avec un ou plusieurs leviers pivotants (14), qui servent à recevoir des éléments de guidage et/ou de serrage de la bande.

2. Magnétoscope selon la revendication 1, caractérisé en ce que le dispositif en forme de pignon (16) comporte un pignon comportant une denture connue en soi, dans laquelle une dent sur deux est raccourcie dans la direction axiale.

3. Magnétoscope selon la revendication 2, caractérisé en ce que la surface lisse (18) du disque de commande (4) possède une largeur axiale telle qu'elle agit uniquement par rapport à la partie axiale du pignon, dans laquelle chaque seconde dent est absente.

# FIG. 1

# ·FIG. 2

# FIG. 3